# EUROPEAN PATENT APPLICATION

(11) **EP 2 848 587 A1**
(43) Date of publication of application: **18.03.2015**
(21) Application number: 12876291.1
(22) Date of filing: 11.05.2012
(51) Int. Cl.: B82B 3/00, B82B 1/00, C08K 3/34, C08J 5/06, B82Y 40/00

(54) **METHOD FOR POLYMERISATION OVER NANOPARTICLES AND POLYMER THUS OBTAINED**

(71) Applicant: Fundación Cidaut, 47151 Boecillo (ES)
(72) Inventor: GALLEGO CASTRO, Raúl, E-47151 Boecillo (ES); NÚÑEZ CARRERO, Karina Carla, E-47151 Boecillo (ES); PASTOR BARAJAS, José María, E-47151 Boecillo (ES); MERINO SENOVILLA, Juan Carlos, E-47151 Boecillo (ES); ALONSO SASTRE, Carlos, E-47151 Boecillo (ES)
(74) Representative: Capitán García, Maria Nuria
(86) International application number: PCT/ES2012/070338
(87) International publication number: WO 2013/167764

(57) **Abstract**

Method for polymerisation over nanoparticles wherein the polymer grows over said nanoparticles, which are initially provided in virgin state and contain the absorbed water characteristic of each nanoparticle, are heat-treated at a temperature of between 50 and 500°C for less than 24 hours such that OH groups are released on the surface of said nanoparticles, introducing same in a polymerisation reactor with a monomer to which a catalyst is added, and the polymerisation is carried out in a liquid medium according to a linear temperature increase, as well as a polymer charged with the nanoparticles thus obtained.

## Description

### OBJECT OF THE INVENTION

The present invention belongs to the field of polymerisation processes and to the polymers obtained by said processes.

Said invention relates to a method for polymerisation over nanoparticles wherein the polymer grows over said nanoparticles. The nanoparticles are provided in virgin state and contain the absorbed water characteristic of each nanoparticle, are heat-treated at a temperature of between 50 and 500°C for less than 24 hours such that OH groups are released on the surface of said nanoparticles, introducing same in a polymerisation reactor with a monomer to which a catalyst is added, and the polymerisation is carried out in a liquid medium according to a linear temperature increase. The invention also relates to a polymer charged with the nanoparticles thus obtained.

### BACKGROUND OF THE INVENTION

Polymerisation methods are known wherein some type of treated charge is used, such as in Patent US 5973084, wherein polyolefins are polymerised with clay treated with salt water and dried at 200°C. This treatment completely eliminates surface water and ions bonded to the OH groups, such that the charge treatment is costly, the polymerisation is more complex due to the preliminary treatments and the distribution of molecular weights is very narrow, consequently hindering the subsequent processing of the material.

Also known are polymerisation processes wherein an increasing temperature is used during the polymerisation, such as in patent EP1778737 where a reinforced rubber is polymerised with a slow increase in the polymerisation temperature.

In the cited prior art the polymerisation processes with charges treat said charges to eliminate as much water as possible from the surface thereof and protect the OH groups in a tedious manner, comprising many steps, in order to carry out an isothermal polymerisation process, which implies a high cost to control the temperature, as the reactions are highly exothermic. The result is a charged polymer with an uneven charge dispersion and low processability, due to the high molecular weight reached.

To overcome the aforementioned drawbacks of the prior art, the following invention of a method for polymerisation over nanoparticles is disclosed, wherein the polymer grows over said nanoparticles. The polymer thus obtained is also disclosed.

### DESCRIPTION OF THE INVENTION

The present invention is established and characterised by the independent claims. The dependent claims describe additional features thereof.

In view of the above, the present invention relates to a method for polymerisation over nanoparticles wherein the polymer grows over said nanoparticles.

Said nanoparticles are initially provided in a virgin state with the absorbed water characteristic of each nanoparticle.

"Virgin state" is meant to specify that the nanoparticles do not undergo any type of surface modification, that is, they are provided as they are obtained.

"Absorbed water characteristic of each nanoparticle" is meant to specify that each nanoparticles absorbs the water allowed by the structure thereof. Thus, there will be zeolitic water interposed in the spaces of the defining lattice of the nanoparticles without participating therein, as well as coordination water forming part of said lattice.

Unlike conventional drying over nanoparticles that completely eliminate both zeolitic and coordination water, the nanoparticles are treated with heat at a temperature between 50 and 500°C for at least 24 hours, such that OH groups are released on the surface of said nanoparticles, facilitating the subsequent action of a first co-catalyst. That is, a superficial dehydration takes place instead of a complete elimination of water from the nanoparticles.

Next, the nanoparticles are introduced in a polymerisation reactor with a monomer to which a catalyst is added, and the polymerisation is carried out in a liquid medium according to a linear temperature increase, such that a polymer charged with the nanoparticles is obtained.

An advantage of the method is that the treatment of the nanoparticles is simple and comprises a single step.

A further advantage is that the linear temperature increase controls the dispersion of the nanoparticles in a nanometric manner during polymerisation; that is, the dispersion observes a nanometric distribution wherein the nanoparticles can be seen to be distributed clearly in the matrix, as there are no agglomerations or similar groupings greater than the nanometric dimension of said nanoparticles. Thereby, the molecular weight distribution obtained is optimised for subsequent processing compared to those obtained in conventional methods in which the temperature is maintained constant.

A further advantage is that the polymers obtained with a high percentage of nanoparticles can be distributed in any commercially available polyolefin matrix by conventional plastic transformation processes, obtaining the desired nanoparticles percentage with an excellent dispersion thereof.

Moreover, the invention also relates to a polymer charged with nanoparticles obtained by the method described above, with a nanoparticle percentage under 6%, nanometrically dispersed, an average molecular weight between 1 and 4 x 10⁵ g/mol and high-speed impact energy absorption as per standard ISO7765 greater than 10 J, according to the test cited in the standard.

An advantage of this polymer is that the molecular weight thereof makes it easy to process and provides outstanding impact energy absorption characteristics.

### DESCRIPTION OF THE DRAWINGS

The present specification is accompanied by a set of drawings illustrating the preferred example, which in no way limit the invention.

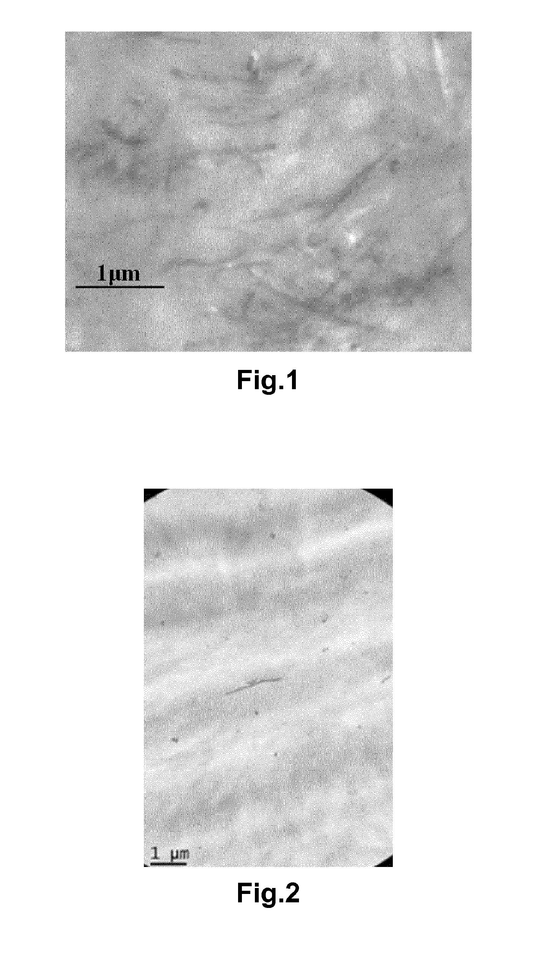

Figure 1 shows a microphotography image obtained by transmission electron microscopy (TEM) of the compound obtained according to example 1, showing the nanometric distribution of the particles.
Figure 2 represents a photograph obtained by TEM of the compound obtained according to example 4, showing the nanometric distribution of the particles, where the dots are the nanoparticle cross-sections.

### PREFERRED EMBODIMENT OF THE INVENTION

The present invention is a method for polymerisation over nanoparticles, wherein the polymer grows over said nap, which are initially provided in virgin state with the absorbed water characteristic of each nanoparticle, comprising the following steps:
a)Heat treating the nanoparticles at a temperature between 50 and 500°C for at least 24 hours such that OH groups are released on the surface of said nanoparticles;
b)Treating the nanoparticles obtained in step a) with a first co-catalyst;
c)Introducing the particles obtained in step b) in a polymerisation reactor with a monomer to which a catalyst is added;
d)Polymerisation in a liquid medium in the reactor of step c) according to a linear temperature increase, thereby obtaining a polymer charged with the nanoparticles.

In step b) it is observed that the nanoparticle:first co-catalyst ratio that provides optimum results ranges from 0.5 to 4.

Optionally, in step c) a second co-catalyst can be added.

In addition, the tests performed show that the linear polymerisation temperature increase in step d) can range from 0.25 to 5°C/min, providing the desired molecular weight distribution.

The temperature range of step a) can vary with respect to the cited range, from 60 to 100°C; specifically, a temperature of 80°C has been shown to be optimum.

Similarly, it has been observed that the reaction time of step a) is between 30 and 270 min.

Specifically, it is possible to use methylaluminoxane (MAO) as the first co-catalyst of step b) and a metallocene catalyst as the catalyst in step c).

In addition, the monomer introduced in the reactor in step c) can be an olefinic monomer to obtain a polyolefinic polymer in step d), or a bi-functional monomer such as monomers with acid, ester or amide groups to obtain polyamides, such as PA6, and polyesters, such as PET.

The polymerisation reactions observed to be most advantageous are polyaddition and polycondensation, for example as is known to obtain polyolefins or polyamides and polyesters respectively.

Similarly, the liquid medium for the polymerisation of step d) can be toluene, which has been found to be optimum, although hexane or others may also be used.

The polymerisation time observed to be most advantageous is from 15 minutes to 1 hour.

The ratio between the characteristic atom of the second co-catalyst and that of the catalyst observed to be appropriate is from 500 to 10000, optimally from 500 to 3000, and preferably 1000.

The polymer charged with nanoparticles obtained according to the above-described method has a nanoparticle percentage under 6%, dispersed nanometrically, an average molecular weight by weight between 1 and 4 x 10⁵ g/mol and high-speed impact energy absorption greater than 10 J according to the test of standard ISO7765.

Some examples of the invention (examples 1 to 6) are provided below by way of illustration, as well as examples for comparison purposes that do not correspond to the invention (comparative examples 1 to 4).

### Examples

### Example 1

2.0 g of sepiolite were dried in a furnace at 80°C during 24 h. It was then mixed with 100 ml of toluene, just distilled, obtaining a dispersion to which was added 0.5 ml of a MAO solution. The mixture was kept under stirring at controlled pressure and temperature conditions for 90 min. After the stirring time, the mixture was filtered and washed three times with just distilled toluene. The modified clay was placed under a nitrogen flow for 30 min.

The polymerisation reactor used has a volume of 1L and is provided with a stirring and temperature control system. The reactor was purged with argon and ethylene prior to the polymerisation. An initial polymerisation temperature of 50°C was set. Then in a first stage an 0.2M MAO solution in toluene, 100ml of toluene and the sepiolite treated in 100ml of toluene were added to the reactor. This mixture was stirred for 5 min at 500 rpm. In a second stage a 7 x 10⁻⁵ M solution in toluene containing the catalyst was added to the reactor. The reactor started after supplying ethylene and applying a linear temperature increase of 3°C/min. When a temperature of 100°C was reached in the reactor, the reaction was stopped by adding a 10% by weight HCL solution in ethanol.

After separating the synthesised polymer from the toluene, the product was dried. 76 g of the nanocompound were obtained with 3.5% sepiolite.

### Example 2

5 g of sepiolite were dried as described in example 1 and subsequently exposed to a 0.2M MAO solution in toluene under the conditions of example 1.

The treated clay was transferred to the reactor with an 0.25 M solution of 1-Hexene and 100 ml of a TIBA solution. The specific catalyst was added and the ethylene pressure was kept constant, applying an initial polymerisation temperature of 50°C and a linear temperature increase of 2°C/min for 30 min.

96 g of the nanocompound were obtained with 3.9% sepiolite.

### Example 3

1.0 g of sepiolite was dried and treated with the equivalent proportion of MAP described in example 2. The reaction was maintained for 2h. The clay was filtered and washed as described in example 1.

The treated clay was transferred to the reactor with 1 g of 1-undecanoic acid and 100 ml of an 0.3M MAO solution. The catalyst was added and ethylene was injected at a pressure of 3 bar. The non-isothermal polymerisation conditions of example 1 were applied.

60 g were obtained of a nanocompound with 5.2% charge.

### Example 4

1.5 g of sepiolite was dried as described in example 1. The dry clay was mixed with 1ml MAO in a toluene solution for 30 min. The treated clay was filtered and dried as described in example 1.

The polymerisation was performed by introducing in a first step the clay treated with 1 g of TIBA in a toluene solution and stirring for 5 min. at 600 rpm. A physical mixture of two specific catalysts was transferred to the reactor. The reaction started when injecting propene at 5 bar and 0°C with a non-isothermal profile (0.25°C/min) for 1 h.

85 g were obtained of a nanocompound with 4.1% charge.

### Example 5

10.0 g of sepiolite were dried as explained in example 1 and placed in contact with 50 ml of a 10% by weight MAO solution. The clay was stirred for 90 min. and dried and filtered as described in example 1.

The clay was transferred to the reactor in 300 ml of toluene and a solution of the catalyst. The reaction started with the injection of ethylene at 3 bar. The polymerisation initial temperature was 50°C and the non-isothermal linear profile was 5°C/min for 5 min.

105 g were obtained of a PE charged at 25% by weight with sepiolite. This charge concentrate was diluted to 4% in an extruder with a commercial PE matrix.

### Example 6

3 g of sepiolite were calcined at 300°C during 3 hours and subsequently treated with 1.5 ml of an MAO solution during 270 min. The treated clay was filtered and dried as described in example 1.

The clay was transferred to the reactor with 100ml of a MAO solution and stirred for 5 min. at 500 rpm. 100 ml of a solution containing the catalyst was added to the reactor. The polymerisation started when adding ethylene gas at 3 bar. The reaction started at 50°C and a linear temperature increase of 3°C/min was applied for 15 min.

50 g of the nanocompound were obtained with 5.5% sepiolite.

### Example 7

50g of caprolactame were mixed in fused state with 2g of sepiolite and the necessary amount of activator for 45 min. at 90°C. The mixture was transferred to the reactor and the initial reaction temperature was set at 90°C. The reaction started with the addition of the co-monomer and the catalyst. A temperature ramp of 1°C was applied until reaching 110°C.

25g of polyamide were obtained with 2.5% sepiolite.

### Comparative example 1

A 0.2M solution of MAO in toluene was introduced in the polymerisation reactor with stirring at 500 rpm for 5 min. In a second stage, a catalyst solution was added with the subsequent injection of ethylene at 3 bar and 50°C. A 3°C/min temperature increase was applied for 15 min.

60 g of the polymer were obtained.

### Comparative example 2

2.5 g of Montmorillonite were calcined at 200°C for 6 h in a nitrogen atmosphere. The calcined clay was placed in contact with a specific catalyst for 1 h under reflux. The clay was separated and vacuum dried for 3 h.

The clay was transferred to the reactor with the 0.6M TIBA solution and polymerised in ethylene at 5 bar and 50°C under an isothermal profile for 8 h.

A nanocompound was obtained with 4.5% clay.

### Comparative example 3

2.0 g of sepiolite were dried and treated with MAO as described in example 1.

An isothermal polymerisation temperature of 50°C was set in the reactor. A 0.3M TIBA solution, 100 ml heptane, the sepiolite treated in 100 ml heptane and a solid catalyst were added to the reaction medium.

The ethylene pressure was kept constant and the reaction was stopped after 20 min. by adding a 10% by weight solution of HCL in ethanol.

32 g were obtained of the nanocompound with 5.5% sepiolite.

### Comparative example 4

1.0 g of sepiolite was treated with the appropriate amount of MAP as described in example 1. This clay was transferred to the reactor with 100 ml of a solution of the catalyst. The reaction started with the injection of ethylene at 3 bar and at 50°C. A linear temperature increase of 3°C/min was applied for 15 min.

20 g were obtained of a nanocompound with a 5% charge.

The following table shows the values obtained in the above-described tests for the compounds obtained in the examples.

| Sample | Young's modulus (MPa) | Elongation at break (%) | Impact energy (a) (J) | Mw x 10⁵ (g/mol) | P.I. (b) | HDT | MFI (c) (g/ 10min) |
|---|---|---|---|---|---|---|---|
| Example 1 | 1351 | 508 | 12.0 | 1.9 | 3.20 | 65.2 | 7 |
| Example 2 | 1094 | 625 | 16.0 | 1.1 | 3.85 | 62.0 | 18 |
| Example 3 | 1598 | 498 | 13.5 | 1.5 | 3.41 | 67.1 | 10 |
| Example 4 | 1819 | 445 | 20.0 | 3.2 | 3.87 | 70.3 | 22 |
| Example 5 | 1238 | 450 | 17.0 | - | - | 62.7 | 12 |
| Example 6 | 1220 | 325 | 10.0 | 2.4 | 2.9 | 61.0 | 5 |
| Example 7 | 2500 | 50 | 57 | 2.0 | - | 96 | 10 |
| Comparative example 1 | 985 | 524 | 8.3 | 1.6 | 3.84 | 56.7 | 9 |
| Comparative example 2 | 1134 | 326 | 6.8 | 2.6 | 2.3 | 61.8 | n.f. (d) |
| Comparative example 3 | 1318 | 325 | 7.1 | 4.3 | 2.1 | 59.2 | n.f. |
| Comparative example 4 | 1410 | 311 | 5.6 | 5.8 | 2.0 | 60.8 | n.f |

| | | | | | | | |
|---|---|---|---|---|---|---|---|
| a High speed test as per ISO7765. b Polydispersity index. c Fluidity index measure at 190°C with 2.16Kg. d No measurement was possible. | | | | | | | |

## Claims

1. Method for polymerisation over nanoparticles wherein the polymer grows over said nanoparticles, which are initially placed in virgin state and with the absorbed water characteristic of each nanoparticle, **characterised in that** it comprises the following steps:
a) Treating the nanoparticles with heat at a temperature between 50 and 500°C for at least 24 hours such that OH groups are released on the surface of said nanoparticles;
b) Treating the nanoparticles obtained in step a) with a first co-catalyst;
c) Introducing the nanoparticles obtained in step b) in a polymerisation reactor with a monomer to which a catalyst is added;
d) Polymerisation in a liquid medium in the reactor of step c) according to a linear temperature increase, such that a polymer charged with the nanoparticles is obtained.

2. Method for polymerisation according to claim 1 wherein in step b) the nanoparticle:first co-catalyst ratio is between 0.5 and 4.

3. Method for polymerisation according to claim 1 wherein in step c) a second co-catalyst is added.

4. Method for polymerisation according to claim 1 wherein in step d) the polymerisation takes place according to a linear temperature increase of 0.25 to 5°C/min.

5. Method for polymerisation according to claim 1 wherein the temperature in step a) is between 60 and 100 °C.

6. Method for polymerisation according to claim 1 wherein the reaction time of step a) is between 30 and 270 min.

7. Method for polymerisation according to claim 1 wherein the first co-catalyst of step b) is MAO and the catalyst of step c) is a metallocene catalyst.

8. Method for polymerisation according to claim 1 wherein the monomer introduced in the reactor in step c) is an olefin monomer in order to obtain a polyolefinic polymer in step d).

9. Method for polymerisation according to claim 1 wherein the monomer introduced in the reactor in step c) is a vinyl or bi-functional monomer.

10. Method for polymerisation according to claim 1 wherein the polymerisation method of step d) is polyaddition or polycondensation.

11. Method for polymerisation according to claim 1 wherein the liquid polymerisation medium of step d) is toluene.

12. Method for polymerisation according to claim 1 wherein the polymerisation time is between 15 minutes and 1 hour.

13. Method for polymerisation according to claim 3 wherein the ratio of the characteristic atom of the second co-catalyst and the characteristic atom of the catalyst is between 500 and 10000.

14. Polymer charged with nanoparticles obtained according to the preceding claims, **characterised in that** the nanoparticle percentage thereof is under 6%, with nanometric dispersion, average molecular weight by weight between 1 and 4 x 10⁵ g/mol and a high-speed impact energy absorption greater than 10 J as per the test of Standard ISO7765.
